# EUROPEAN PATENT APPLICATION

(11) **EP 4 668 544 A1**
(43) Date of publication of application: **24.12.2025**
(21) Application number: 23922910.7
(22) Date of filing: 08.12.2023
(51) Int. Cl.: H02K 1/276

(54) **ROTATING ELECTRIC MACHINE ROTOR**

(30) Priority: 17.02.2023 JP 2023023148
(71) Applicant: AISIN CORPORATION, Kariya-shi, Aichi 448-8650 (JP)
(72) Inventor: KIDO, Yushi, Kariya-shi, Aichi 448-8650 (JP); IDEUE, Shigeki, Kariya-shi, Aichi 448-8650 (JP)
(74) Representative: TBK
(86) International application number: PCT/JP2023/044026
(87) International publication number: WO 2024/171577

(57) **Abstract**

Disclosed is a rotor for a rotating electric machine, the rotor including: a rotor core that has an annular shape as viewed in an axial direction; a rotor shaft that is disposed radially inside the rotor core and is coupled to the rotor core by radial interference; and magnets that are disposed in the rotor core on a per-magnetic-pole basis so as to form a plurality of magnetic poles along a circumferential direction. The rotor core has a plurality of holes on a radially inner side of the magnets, the plurality of holes extending in the axial direction. The plurality of holes form a first hole row and a second hole row at a first radial position and a second radial position, respectively, in order from closest to radial positions of the magnets, the first hole row and the second hole row each being aligned in the circumferential direction. A first circumferential range between the plurality of holes that are adjacent to each other and form the first hole row is circumferentially offset with respect to a circumferential position between the magnets of the respective magnetic poles.

## Description

### TECHNICAL FIELD

The present disclosure relates to a rotor for a rotating electric machine.

### BACKGROUND ART

In a rotor core of a rotor for a rotating electric machine, a technique is known in which a magnet holes for inserting a plurality of permanent magnets are formed, and slits are formed radially inside the magnet holes.

### CITATIONS LIST

### PATENT LITERATURE

Patent Literature 1: JP 2021-136785 A

### SUMMARY OF INVENTION

### TECHNICAL PROBLEMS

However, in the conventional technique as described above, it is still difficult to cope with an increase in centrifugal force accompanying a high rotation speed of the rotating electric machine. That is, the change amount (increase amount) in the inner diameter of the rotor core due to the centrifugal force is still likely to increase.

Therefore, in one aspect, the present disclosure further reduces the change amount of the inner diameter of the rotor core caused by the centrifugal force.

### SOLUTIONS TO PROBLEMS

In one aspect, provided is a rotor for a rotating electric machine, the rotor including:
a rotor core that has an annular shape as viewed in an axial direction;
a rotor shaft that is disposed radially inside the rotor core and is coupled to the rotor core by radial interference; and
magnets that are disposed in the rotor core on a per-magnetic-pole basis so as to form a plurality of magnetic poles along a circumferential direction,
in which the rotor core has a plurality of holes on a radially inner side of the magnets, the plurality of holes extending in the axial direction, and
the plurality of holes form a first hole row in which the plurality of holes are arranged in the circumferential direction at first radial positions on a radially inner side of a radial position of the magnets and a second hole row in which the plurality of holes are arranged in the circumferential direction at second radial positions on a radially inner side of the first radial positions, and
a first circumferential range between the plurality of holes that are adjacent to each other and form the first hole row is circumferentially offset with respect to a circumferential position of a q-axis.

### ADVANTAGEOUS EFFECTS OF INVENTION

In one aspect, the present disclosure enables further reduction of the amount of change in the inner diameter of the rotor core caused by the centrifugal force.

### BRIEF DESCRIPTION OF DRAWINGS

FIG. 1 is a cross-sectional view schematically illustrating a cross-sectional structure of a motor according to an embodiment.
FIG. 2 is a cross-sectional view of a rotor core of a rotor (a cross-sectional view taken along a plane vertical to the axial direction).
FIG. 3 is an enlarged view of a portion related to one magnetic pole of the rotor and a part of an adjacent portion thereof.
FIG. 4 is an enlarged view of a portion related to one magnetic pole of a rotor core according to a comparative example and a part of an adjacent portion thereof.
FIG. 5 is a diagram illustrating an analysis result of a change amount of the inner diameter of the rotor core when a centrifugal force is generated.
FIG. 6 is an enlarged view of a portion related to one magnetic pole of a rotor core according to a modification and a part of an adjacent portion thereof.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and shapes and the like in the drawings may be partially exaggerated for convenience of description. In addition, in the drawings, only some of a plurality of sections having the same attribute may be denoted by reference signs for the sake of clarity.

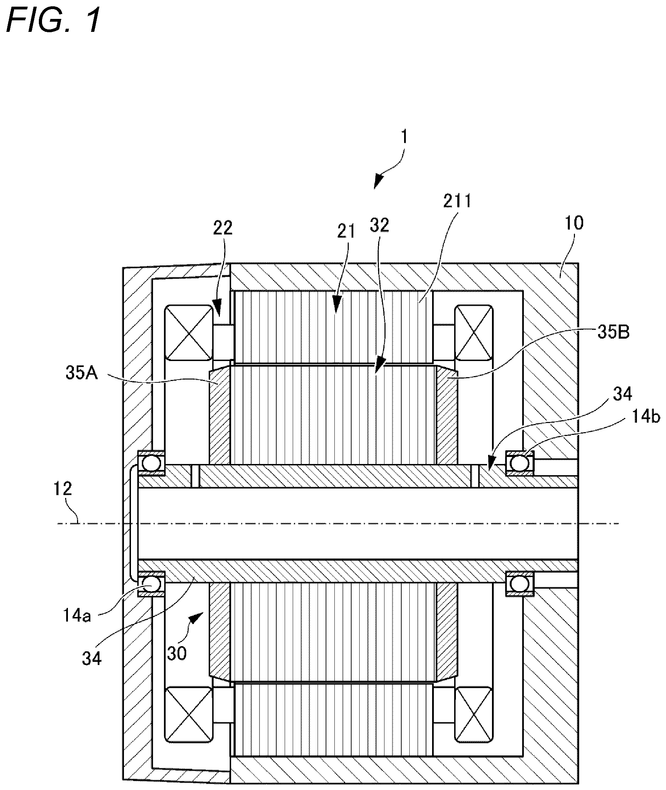

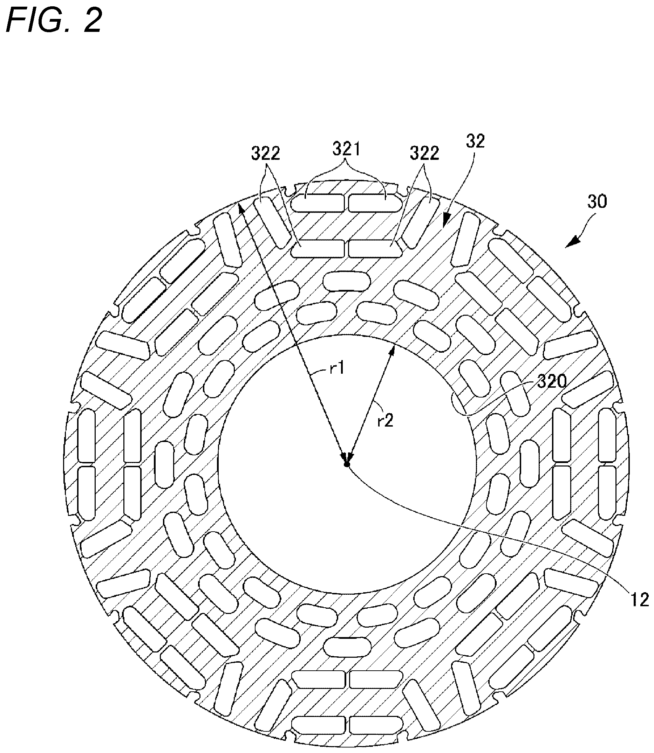

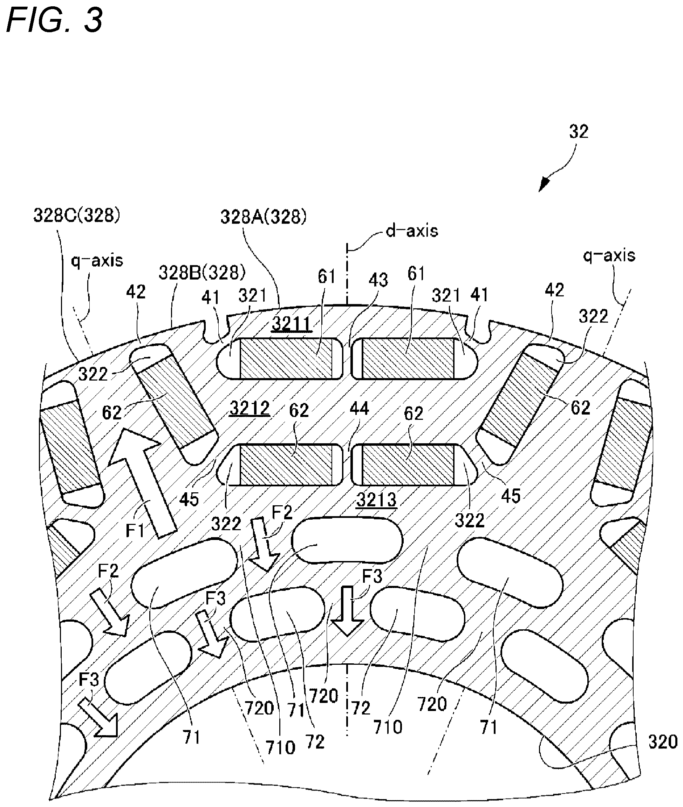

FIG. 1 is a cross-sectional view schematically illustrating a cross-sectional structure of a motor 1 according to an embodiment. FIG. 2 is a cross-sectional view of a rotor core 32 of a rotor 30 (a cross-sectional view taken along a plane vertical to the axial direction). FIG. 3 is an enlarged view of a portion related to one magnetic pole of the rotor 30 and a part of an adjacent portion thereof.

FIG. 1 illustrates a rotation axis 12 of the motor 1. In the following description, the axial direction refers to a direction in which a rotation axis (rotation center) 12 of the motor 1 extends, and the radial direction refers to a radial direction around the rotation axis 12. Therefore, a radially outer side refers to a side away from the rotation axis 12, and a radially inner side refers to a side toward the rotation axis 12. In addition, a circumferential direction corresponds to a rotation direction around the rotation axis 12.

The motor 1 may be, for example, a motor for driving a vehicle used in a hybrid vehicle or an electric vehicle. However, the motor 1 may be used for any other application.

The motor 1 is of an inner rotor type, and is provided such that a stator 21 surrounds the radially outer side of the rotor 30. The stator 21 is fixed to a motor housing 10. The stator 21 includes a stator core 211 made of, for example, an annular magnetic laminated steel plate, and a plurality of slots (not illustrated) around which a coil 22 is wound is formed radially inside the stator core 211.

The rotor 30 is disposed radially inside the stator 21.

The rotor 30 includes a rotor core 32, a rotor shaft 34, end plates 35A and 35B, and magnet pieces 61, 62. Note that the end plates 35A, 35B may be omitted.

The rotor core 32 is fixed to a radially outer surface of the rotor shaft 34 and rotates integrally with the rotor shaft 34. The rotor core 32 has a shaft hole 320 (see FIG. 2), and the rotor shaft 34 is fitted into the shaft hole 320. The rotor core 32 is coupled to the rotor shaft 34 with radial interference. That is, the rotor core 32 and the rotor shaft 34 are coupled to each other by fastening by interference. For example, the rotor core 32 and the rotor shaft 34 may be coupled in a manner having radial interference by shrink fitting, press fitting, hydroforming, or the like. However, the coupling force between the rotor core 32 and the rotor shaft 34 may include not only radial interference but also an axial force by a nut or the like.

The rotor shaft 34 is rotatably supported by the motor housing 10 via bearings 14a, 14b. Note that the rotor shaft 34 defines the rotation axis 12 of the motor 1.

The rotor core 32 is formed of, for example, an annular magnetic laminated steel plate. Inside the rotor core 32, the magnet pieces 61, 62 (see FIG. 3) are embedded. That is, the rotor core 32 has magnet holes 321 and 322 (see FIG. 2) penetrating in the axial direction, and the magnet pieces 61, 62 are inserted and fixed in the magnet holes 321, 322. Note that in a modification, the rotor core 32 may be formed of a green compact in which magnetic powder is compressed and solidified.

The rotor core 32 is designed to have a circular shape with an outer diameter r1 and an inner diameter r2 (the diameter of the shaft hole 320). Note that, in a modification, the circular shape of the rotor core 32 does not need to be a perfect circle, and may be, for example, a circular shape partially having a notch.

As illustrated in FIG. 2, the rotor core 32 is rotationally symmetric about the rotation axis 12 as viewed in the axial direction. In the example illustrated in FIG. 2, the sets of the magnet pieces 61, 62 overlap each other every time the rotor core 32 rotates 45 degrees about the rotation axis 12.

The plurality of magnet pieces 61, 62 are in the form of sintered magnets, and may be formed of neodymium or the like. However, in the modification, magnets formed of a bonded magnet material may be used instead of the magnet pieces 61, 62. In the present embodiment, as an example, as illustrated in FIG. 3, the plurality of magnet pieces 61, 62 are arranged so as to be rotationally symmetric for each magnetic pole as viewed in the axial direction. Note that the plurality of magnet pieces 61, 62 are arranged such that S poles and N poles alternately appear in the circumferential direction. In the present embodiment, the number of magnetic poles is eight, but the number of magnetic poles is arbitrary. In addition, in the present embodiment, the magnet pieces 61, 62 have the same linear form as viewed in the axial direction, but may have different forms. Furthermore, at least one of the magnet piece 61 or the magnet piece 62 may have an arc shape as viewed in the axial direction.

Note that although FIG. 1 illustrates the motor 1 having a specific structure, the structure of the motor 1 is not limited to such a specific structure. For example, in FIG. 1, the rotor shaft 34 is hollow, but may be solid.

Next, the rotor core 32 and the magnet pieces 61, 62 will be described in more detail with reference to FIG. 3 and subsequent drawings. Hereinafter, a configuration related to one magnetic pole will be described, but the same may be applied to configurations related to other magnetic poles.

As illustrated in FIG. 3, the configuration related to one magnetic pole is basically symmetric with respect to a d-axis (in FIG. 3, expressed in English as "d-axis") corresponding to the main magnetic flux direction (the direction of the field pole). Note that the direction of the d-axis corresponds to the direction of the magnetic field generated by the magnet pieces 61, 62 disposed in the rotor 30. Hereinafter, a circumferentially outer side refers to a side away from the d-axis, and a circumferentially inner side refers to a side approaching the d-axis. Note that while the d-axis is formed at the circumferential center position of the circumferential range for each magnetic pole, a q-axis (in FIG. 3, expressed in English as "q-axis") is formed at the boundary (circumferential position between the magnet pieces 61, 62 for respective magnetic poles) of the circumferential ranges for the respective magnetic poles.

Magnet holes 321 (hereinafter, referred to as "first-layer magnet holes 321") and magnet holes 322 (hereinafter, referred to as "second-layer magnet holes 322") are formed in the rotor core 32. Note that the magnet holes 321 and the magnet holes 322 are formed to be rotationally symmetric for each magnetic pole.

The two first-layer magnet holes 321 are paired to form a substantially V shape (a substantially V shape in which the radially outer side or the radially inner side is opened). However, in a modification, the two first-layer magnet holes 321 may be paired to form a straight line, or may be realized by one hole in a straight line (a straight line vertical to the d-axis). The magnet piece 61 is provided in each of the first-layer magnet holes 321. Note that a gap may be provided between the first-layer magnet hole 321 and the magnet piece 61 at both ends in the longitudinal direction of the magnet piece 61. Note that the gap may be a cavity or may be filled with resin or the like.

The second-layer magnet holes 322 are provided radially inside the first-layer magnet holes 321. Note that regarding the positional relationship between the first-layer magnet holes 321 and the second-layer magnet holes 322, the radially outer side or the radially inner side is a positional relationship in which points that intersect a common line segment passing through the rotation axis 12 as viewed in the axial direction are compared. The same applies to a positional relationship between a first section 3211 described later and the first-layer magnet holes 321.

Similarly to the first-layer magnet holes 321, the second-layer magnet holes 322 are formed in a pair symmetrical with respect to the d-axis. Note that the second-layer magnet holes 322 on both sides of the d-axis in the circumferential direction have a wider extending range in the circumferential direction than the first-layer magnet holes 321 on both sides of the d-axis in the circumferential direction. The magnet piece 62 is provided in each of the second-layer magnet holes 322. Note that a gap may be provided between the second-layer magnet hole 322 and the magnet piece 62 at both ends in the longitudinal direction of the magnet piece 62. Note that the gap may be a cavity or may be filled with resin or the like.

In the present embodiment, the two second-layer magnet holes 322 are formed on one side of the d-axis in the circumferential direction, and the two second-layer magnet holes 322 are formed on the other side of the d-axis in the circumferential direction. That is, a total of four second-layer magnet holes 322 are formed for one magnetic pole.

Since the rotor core 32 has the first-layer magnet holes 321 and the second-layer magnet holes 322 as described above, the rotor core 32 has three sections 3211, 3212, 3213 (hereinafter, also referred to as the first section 3211, a second section 3212, and a third section 3213) connected only via bridge portions in the radial direction.

Specifically, the first section 3211 extends radially outward from the first-layer magnet holes 321. The first section 3211 forms a part 328A (see FIG. 3) of an outer circumferential surface 328 of the rotor core 32. The first section 3211 forms a magnetic path of a q-axis magnetic flux. Specifically, the q-axis magnetic flux related to the first section 3211 flows from one end in the circumferential direction to the other end in the circumferential direction of the first section 3211 through the first section 3211 (a region radially outside the first-layer magnet holes 321).

The second section 3212 passes between the second-layer magnet holes 322 and the first-layer magnet holes 321, and the both circumferential sides thereof extend to the outer circumferential surface 328 of the rotor core 32. The second section 3212 forms a part 328B (hereinafter, also referred to as an "outer circumferential surface portion 328B of the second section 3212") of the outer circumferential surface 328 of the rotor core 32 on both circumferential sides of the first section 3211 (see FIG. 3). The second section 3212 forms a magnetic path of a q-axis magnetic flux. Specifically, the q-axis magnetic flux related to the second section 3212 flows between the second-layer magnet holes 322 and the first-layer magnet holes 321 from one end (outer circumferential surface portion 328B on one side) toward the other end (outer circumferential surface portion 328B on the other side) of the second section 3212.

The third section 3213 passes through the radially inner side of the second-layer magnet holes 322, and the both circumferential sides thereof extend to the outer circumferential surface 328 of the rotor core 32. The third section 3213 forms a part 328C (see FIG. 3) of the outer circumferential surface 328 of the rotor core 32 on both circumferential sides of the second section 3212.

Note that in the present embodiment, the mass of the third section 3213 may be significantly larger than the mass of the second section 3212, and the mass of the second section 3212 may be significantly larger than the mass of the first section 3211.

In addition, since the rotor core 32 includes the three sections 3211, 3212, 3213 as described above, the rotor core 32 includes a plurality of bridge portions 41, 42, 43, 44, 45 connecting the three sections 3211, 3212, 3213.

On the radially outer side, the bridge portion 41 (hereinafter, referred to as a "first bridge portion 41") supports the first section 3211 in relation to the second section 3212. That is, the first bridge portion 41 connects the second section 3212 and the first section 3211 and extends in the circumferential direction. The first bridge portions 41 are provided in pairs on both circumferential sides (circumferentially outer sides) of the first section 3211.

On the radially outer side, the bridge portion 42 (hereinafter, referred to as a "second bridge portion 42") supports the second section 3212 in relation to the third section 3213. That is, the second bridge portion 42 connects the third section 3213 and the second section 3212 and extends in the circumferential direction. The second bridge portions 42 are provided in pairs on both circumferential sides (circumferentially outer sides) of the second section 3212.

On the d-axis, the bridge portion 43 (hereinafter, referred to as a "first center bridge portion 43") supports the first section 3211 in relation to the second section 3212.

On the d-axis, the bridge portion 44 (hereinafter, referred to as a "second center bridge portion 44") supports the second section 3212 in relation to the third section 3213.

Between the two second-layer magnet holes 322, the bridge portion 45 (hereinafter, referred to as a "second intermediate bridge portion 45") supports the second section 3212 in relation to the third section 3213.

In the example illustrated in FIG. 3, the magnet piece 61 inserted into each of the first-layer magnet holes 321 forms a permanent magnet of a first layer from the radially outer side, and the magnet piece 62 inserted into each of the second-layer magnet holes 322 forms a permanent magnet of the second layer from the radially outer side. Note that in the present embodiment, one magnet piece (the magnet piece 61 or the magnet piece 62) is inserted into one magnet hole (the first-layer magnet hole 321 or the second-layer magnet hole 322), but in a modification, two or more magnet pieces may be inserted into one magnet hole.

In addition, in the example illustrated in FIG. 3, neither the first-layer magnet hole 321 nor the second-layer magnet hole 322 extends on the d-axis, but the first center bridge portion 43 and the second center bridge portion 44 are provided on the d-axis. However, in a modification, one or both of the first-layer magnet hole 321 and the second-layer magnet hole 322 may extend on the d-axis.

Furthermore, in the example illustrated in FIG. 3, neither the magnet piece 61 nor the magnet piece 62 extends on the d-axis similarly to the first-layer magnet hole 321 and the second-layer magnet hole 322, but only one or both of the magnet piece 61 and the magnet piece 62 may extend on the d-axis. In addition, at least one of the first bridge portion 41, the second bridge portion 42, and the second intermediate bridge portion 45 may be omitted. Moreover, in the example illustrated in FIG. 3, the magnet pieces 61, 62 have a two-layer structure in which the magnet pieces 61, 62 are arranged radially inside and outside in two layers, but may have a single-layer structure (for example, a structure in which any one of the magnet pieces 61 and the magnet pieces 62 are omitted) or a structure of three or more layers.

Next, a characteristic configuration of the present embodiment will be described with further reference to FIG. 3.

In the present embodiment, as illustrated in FIG. 3, the rotor core 32 has first slits 71 and second slits 72 on the radially inner side of the magnet holes 321 and 322 (and the magnet pieces 61, 62 therein). That is, the first slits 71 and the second slits 72 are formed in the third section 3213 of the rotor core 32. Each of the first slit 71 and the second slit 72 is in the form of an axial hole penetrating the rotor core 32 in the axial direction.

The first slits 71 are disposed at positions on a radially inner side of the magnet holes 322 and a radially outer side of the second slits 72 (hereinafter, also referred to as "first radial positions"). The second slits 72 are disposed at positions on a radially inner side of the first slits 71 and a radially outer side of the shaft hole 320 (hereinafter, also referred to as "second radial positions").

A plurality of first slits 71 are provided. The plurality of first slits 71 are provided at the first radial positions in a rotationally symmetric manner for each magnetic pole. The plurality of first slits 71 form a hole row (an example of a first hole row) arranged in the circumferential direction. Note that in the present embodiment, the first slits 71 for each magnetic pole includes one slit whose circumferential center is located on the d-axis and a half (half divided by the q-axis) of each of two slits whose circumferential centers are located on the q-axes.

A bridge portion (hereinafter, also referred to as a "first inter-slit bridge 710") extending in the radial direction is formed in a circumferential range (an example of a first circumferential range) between the plurality of first slits 71. In the present embodiment, as illustrated in FIG. 3, the first inter-slit bridge 710 is offset in the circumferential direction with respect to the q-axis. That is, the first inter-slit bridge 710 is formed at a location where the q-axis does not pass. In addition, as illustrated in FIG. 3, the first inter-slit bridge 710 is also offset in the circumferential direction with respect to the d-axis. That is, the first inter-slit bridge 710 is formed at a location where neither the d-axis nor the q-axis passes.

A plurality of second slits 72 are provided. The plurality of second slits 72 are provided at the second radial positions in a rotationally symmetric manner for each magnetic pole. The plurality of second slits 72 form a hole row (an example of a second hole row) arranged in the circumferential direction. Note that in the present embodiment, the second slits 72 for each magnetic pole includes two slits each located between the d-axis and the q-axis in the circumferential direction.

A bridge portion (hereinafter, also referred to as a "second inter-slit bridge 720") extending in the radial direction is formed in a circumferential range (an example of a second circumferential range) between the plurality of second slits 72. In the present embodiment, as illustrated in FIG. 3, some of the plurality of second inter-slit bridges 720 is formed on the q-axes, and the remaining ones are formed on the d-axis. That is, the plurality of second inter-slit bridges 720 includes the second inter-slit bridges 720 on the q-axes and the second inter-slit bridge 720 on the d-axis.

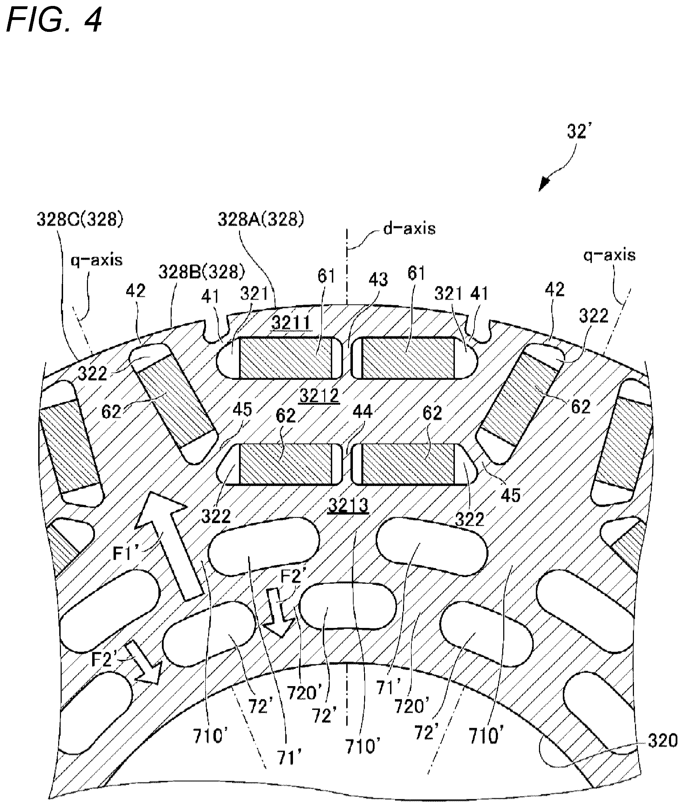

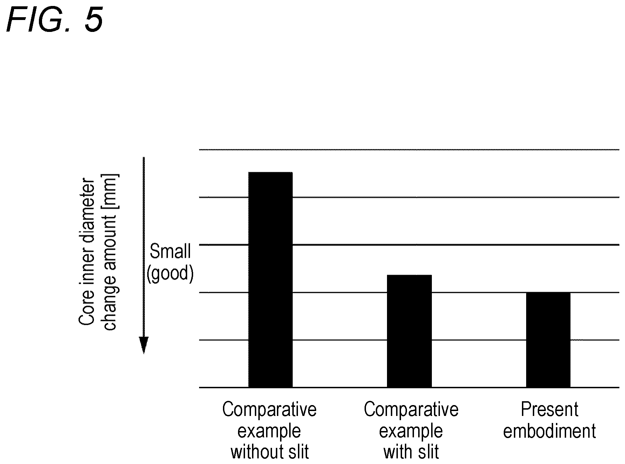

Here, effects of the present embodiment will be described with reference to a comparative example illustrated in FIG. 4 and the analysis result illustrated in FIG. 5.

FIG. 4 is an enlarged view of a portion related to one magnetic pole of a rotor core 32' according to a comparative example and a part of an adjacent portion thereof, and is a view for comparison with FIG. 3.

The rotor core 32' according to the comparative example is different in that the first slit 71 and the second slit 72 are replaced with a first slit 71' and a second slit 72'. The first slit 71' and the second slit 72' have phases in the circumferential direction different from those of the first slit 71 and the second slit 72 according to the present embodiment. That is, the first slits 71' for each magnetic pole includes two slits each located between the d-axis and the q-axis in the circumferential direction. In this case, the first inter-slit bridge 710' extends on the q-axis or the d-axis. In addition, the second slits 72' for each magnetic pole includes one slit whose circumferential center is located on the d-axis and a half (half divided by the q-axis) of each of two slits whose circumferential centers are located on the q-axes. In this case, a second inter-slit bridge 720' is offset in the circumferential direction with respect to the d-axis and the q-axis.

FIG. 5 is a diagram illustrating an analysis result of the maximum value of the change amount of the inner diameter (see r2 in FIG. 2) of the rotor core 32 when centrifugal force is generated by rotating the motor 1 (rotor 30) at a high speed.

FIG. 5 illustrates the analysis results of the present embodiment and still another comparative example together with the comparative example illustrated in FIG. 4, and the vertical axis of the bar graph represents the maximum value of the change amount of the inner diameter (see r2 in FIG. 2) of the rotor core 32 (hereinafter, also referred to as "core inner diameter change amount"), and the value is smaller as it goes downward. Note that the maximum value of the change amount of the inner diameter (see r2 in FIG. 2) of the rotor core 32 refers to the maximum value among the change amounts that can be different at respective circumferential positions in the peripheral edge portion of the shaft hole 320 of the rotor core 32.

Although not illustrated, the still another comparative example has a configuration having no slit such as the first slit 71 and the second slit 72 and the first slit 71' and the second slit 72', and is hereinafter also referred to as a "comparative example without a slit". Furthermore, the comparative example illustrated in FIG. 4 is also referred to as a "comparative example with slits" for distinction in FIG. 5.

When the core inner diameter change amount (increase amount) becomes excessive, the radial interference between the rotor core 32 and the rotor shaft 34 is significantly reduced or eliminated, and torque transmission between the rotor core 32 and the rotor shaft 34 may be hindered. Since the core inner diameter change amount (increase amount) increases as the centrifugal force increases (that is, as the rotation speed increases), it is advantageous that the core inner diameter change amount is small in order to increase the rotation speed of the motor 1.

As can be seen from FIG. 5, in the present embodiment, the core inner diameter change amount is greatly reduced as compared with the comparative example without a slit, similarly to the comparative example with slits illustrated in FIG. 4. From this, it can be seen that the first slit 71 and the second slit 72 (the same applies to the first slit 71' and the second slit 72') have a function of alleviating the radially outward force received by the peripheral portion of the shaft hole 320 of the rotor core 32 due to the centrifugal force. According to the present embodiment, the alleviation function can be effectively enhanced by the configuration of two layers (two rows) in which the first slits 71 and the second slits 72 are disposed at different positions in the radial direction.

In addition, in the present embodiment, similarly to the comparative example with the slits illustrated in FIG. 4, the first inter-slit bridge 710 and the second inter-slit bridge 720 have different circumferential positions (phases) from each other, and thus, it is possible to effectively alleviate the radially outward force received by the peripheral edge portion of the shaft hole 320 of the rotor core 32 due to the centrifugal force. As a result, the core inner diameter change amount can be effectively reduced.

In addition, in the present embodiment, as illustrated in FIG. 5, the core inner diameter change amount is further reduced as compared with the comparative example illustrated in FIG. 4. This is because the first inter-slit bridge 710 is offset in the circumferential direction with respect to the q-axis as described above in the present embodiment. When the first inter-slit bridge 710 is offset in the circumferential direction with respect to the q-axis, the force applied to the entire peripheral edge portion of the shaft hole 320 of the rotor core 32 is alleviated. This can also be seen from the fact that radially outward force F1 along the q-axis illustrated in FIG. 3 is substantially received by the three second inter-slit bridges 720 (see force F3) via the two first inter-slit bridges 710 (see force F2). Note that in the comparative example illustrated in FIG. 4, radially outward force F1' along the q-axis is substantially received by the two second inter-slit bridges 720' (see the force F2').

Here, the radially outward force F1 along the q-axis has been described, but the radially outward force along the d-axis also has a similar tendency. Note that the radially outward force F1 along the q-axis generated by the centrifugal force tends to be larger than the radially outward force along the d-axis.

As described above, according to the present embodiment, the change amount of the inner diameter of the rotor core 32 caused by the centrifugal force can be further reduced as compared with the comparative example illustrated in FIG. 4. This makes it possible to further increase the rotation speed of the motor 1.

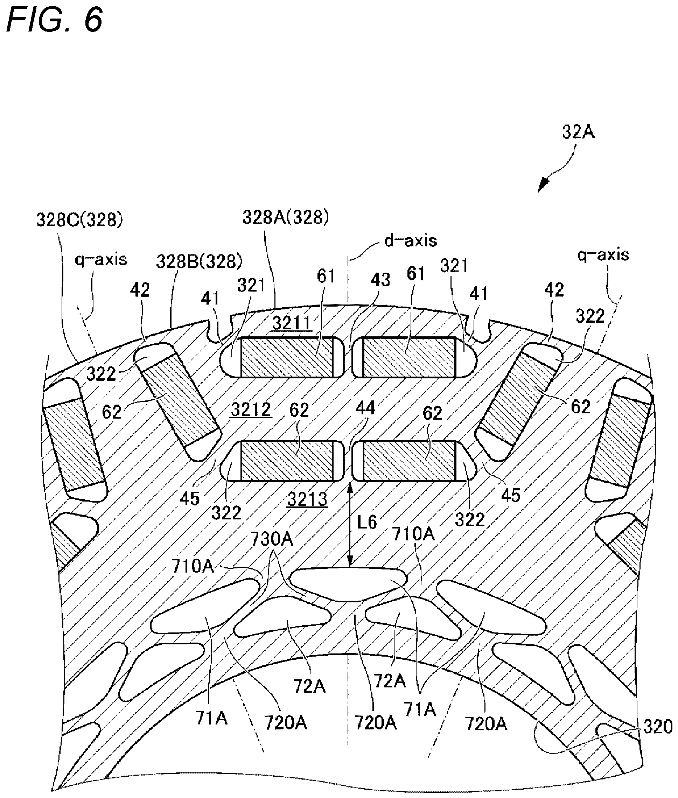

Next, a modification will be described with reference to FIG. 6.

FIG. 6 is an enlarged view of a portion related to one magnetic pole of a rotor core 32A according to a modification and a part of an adjacent portion thereof, and is a view corresponding to FIG. 3 described above.

The rotor core 32A according to the present modification is different in that the first slit 71 and the second slit 72 are replaced with a first slit 71A and a second slit 72A. The first slit 71A and the second slit 72A have the same phases in the circumferential direction as those of the first slit 71 and the second slit 72 according to the present embodiment, but have a different radial relationship and shapes.

Specifically, in the present modification, the radial extending ranges of the first slit 71A and the second slit 72A overlap each other as illustrated in FIG. 6. That is, the radially inner portion of the first slit 71A and the radially outer portion of the second slit 72A extend in the same radial range while being offset in the circumferential direction.

In this case, the first slit 71A has a slit form in which the slit width in the circumferential direction gradually decreases toward the radially inner side, and the second slit 72A has a slit form in which the slit width in the circumferential direction gradually decreases toward the radially outer side. A section 730A connecting a first inter-slit bridge 710A and a second inter-slit bridge 720A extends in the circumferential direction and the radial direction.

According to such a modification, effects similar to those of the above-described embodiment can be obtained. Furthermore, according to the present modification, since the radial extending range of the first slit 7 1A and the radial extending range of the second slit 72A overlap each other, the entire slit extending range of the first slit 71 and the second slit 72 in the radial direction can be minimized. As a result, a distance L6 (see FIG. 6) between the slit extending range in the radial direction and a magnet extending range in the radial direction in the rotor core 32A can be relatively increased. As a result, the strength of the rotor core 32A can be increased, and the stress generated in each bridge portion (bridge portions 41, 42, and the like) can be efficiently reduced.

Although each embodiment has been described in detail above, the present invention is not limited to a specific embodiment, and various modifications and changes can be made within the scope described in the claims. In addition, all or a plurality of the components of the above-described embodiments can be combined.

For example, in the above-described embodiment (the same applies to the modification), the slit configuration of two rows, that is, the hole row including the plurality of first slits 71 and the hole row including the plurality of second slits 72 is adopted, but the number of rows is arbitrary, and a slit configuration of three or more rows is also possible. Also in this case, a plurality of slits forming the hole row located closest to the radially outer side (that is, the hole row closest to the magnet extending range in the radial direction) may have a configuration (phase in the circumferential direction) similar to that of the plurality of first slits 71. Furthermore, in this case, a plurality of slits forming the hole row located second closest to the radially outer side may have a configuration (phase in the circumferential direction) similar to that of the plurality of second slits 72, and the plurality of slits forming the hole row located third closest to the radially outer side may have a configuration (phase in the circumferential direction) similar to that of the plurality of first slits 71, and so on.

### REFERENCE SIGNS LIST

30: Rotor (Rotor for rotating electric machine), 32: Rotor core, 34: Rotor shaft, 61, 62: Magnet piece (Magnet), 71: First slit (Axial hole forming first hole row), and 72: Second slit (Axial hole forming second hole row)

## Claims

1. A rotor for a rotating electric machine, the rotor comprising:
a rotor core that has an annular shape as viewed in an axial direction;
a rotor shaft that is disposed radially inside the rotor core and is coupled to the rotor core by radial interference; and
magnets that are disposed in the rotor core on a per-magnetic-pole basis so as to form a plurality of magnetic poles along a circumferential direction,
wherein the rotor core has a plurality of holes on a radially inner side of the magnets, the plurality of holes extending in the axial direction,
the plurality of holes form a first hole row in which the plurality of holes are arranged in the circumferential direction at first radial positions on a radially inner side of radial positions of the magnets and a second hole row in which the plurality of holes are arranged in the circumferential direction at second radial positions on a radially inner side of the first radial positions, and
a first circumferential range between the plurality of holes that are adjacent to each other and form the first hole row is circumferentially offset with respect to a circumferential position of a q-axis.

2. The rotor for a rotating electric machine according to claim 1, wherein the first circumferential range is further offset in the circumferential direction with respect to a circumferential position of a d-axis.

3. The rotor for a rotating electric machine according to claim 2, wherein a second circumferential range between the axial holes forming the second hole row includes a circumferential position of the q-axis.

4. The rotor for a rotating electric machine according to claim 3, wherein the second circumferential range includes a circumferential position of the d-axis.

5. The rotor for a rotating electric machine according to any one of claims 1 to 4, wherein a radial extending range of the first hole row and a radial extending range of the second hole overlap each other.
